# EUROPEAN PATENT APPLICATION

(11) **EP 4 529 104 A1**
(43) Date of publication of application: **26.03.2025**
(21) Application number: 23819012.8
(22) Date of filing: 01.06.2023
(51) Int. Cl.: H04L 25/03, H04L 7/00

(54) **PATH RECOVERY METHOD AND APPARATUS, DEVICE, SYSTEM, AND COMPUTER-READABLE STORAGE MEDIUM**

(30) Priority: 09.06.2022 CN 202210652067
(71) Applicant: Huawei Technologies Co., Ltd., Shenzhen, Guangdong 518129 (CN)
(72) Inventor: LI, Cheng, Shenzhen, Guangdong 518129 (CN); ZHANG, Zhengtao, Shenzhen, Guangdong 518129 (CN); XU, Zhihua, Shenzhen, Guangdong 518129 (CN); YANG, Guanghu, Shenzhen, Guangdong 518129 (CN); JIANG, Zebin, Shenzhen, Guangdong 518129 (CN)
(74) Representative: Gill Jennings & Every LLP
(86) International application number: PCT/CN2023/097862
(87) International publication number: WO 2023/236847

(57) **Abstract**

This application discloses a path recovery method and apparatus, a device, a system, and a computer-readable storage medium, and relates to the field of communication technologies. The method includes: When an anomaly occurs on a transmission path of a signal, a target adaptive equalization coefficient corresponding to an anomaly type of the transmission path is determined from a plurality of candidate adaptive equalization coefficients that enable an adaptive equalization operation to converge. Then, the adaptive equalization operation is performed on the signal based on the target adaptive equalization coefficient to obtain an adaptive equalized signal. Finally, the transmission path is recovered based on the adaptive equalized signal. In the method, the target adaptive equalization coefficient for performing adaptive equalization is determined from the plurality of candidate adaptive equalization coefficients that enable the adaptive equalization operation to converge, so that the adaptive equalization operation performed based on the target adaptive equalization coefficient can be quickly converged. In this way, the transmission path of the signal can be quickly recovered, and path recovery efficiency can be improved.

## Description

This application claims priority to Chinese Patent Application No. 202210652067.8, filed on June 9, 2022 and entitled "PATH RECOVERY METHOD AND APPARATUS, DEVICE, SYSTEM, AND COMPUTER-READABLE STORAGE MEDIUM", which is incorporated herein by reference in its entirety.

### TECHNICAL FIELD

This application relates to the field of communication technologies, and in particular, to a path recovery method and apparatus, a device, a system, and a computer-readable storage medium.

### BACKGROUND

With evolution of network devices, interconnection of components in a network device is implemented by using a serializer/deserializer (serializer/deserializer, SerDes) input/output (input/output, I/O) interface. After receiving a signal, a component serving as a receiver performs an adaptive equalization operation on the signal, and establishes, based on an adaptive equalized signal, a transmission path between the receiver and a component serving as a transmitter, to perform subsequent data processing. If an anomaly occurs on the transmission path, causing an interruption in signal transmission, the component serving as the receiver needs to re-establish the transmission path, that is, recover the transmission path, to ensure normal execution of data processing corresponding to the signal.

### SUMMARY

This application provides a path recovery method and apparatus, a device, a system, and a computer-readable storage medium, to improve path recovery efficiency.

According to a first aspect, a path recovery method is provided. The method includes: When an anomaly occurs on a transmission path of a signal, a target adaptive equalization coefficient corresponding to an anomaly type of the transmission path is determined from a plurality of candidate adaptive equalization coefficients that enable an adaptive equalization operation to converge. Then, the adaptive equalization operation is performed on the signal based on the target adaptive equalization coefficient to obtain an adaptive equalized signal. Finally, the transmission path is recovered based on the adaptive equalized signal.

In the method, the target adaptive equalization coefficient for performing adaptive equalization is determined from the plurality of candidate adaptive equalization coefficients that enable the adaptive equalization operation to converge, so that the adaptive equalization operation performed based on the target adaptive equalization coefficient can be quickly converged. In this way, the transmission path of the signal can be quickly recovered, and path recovery efficiency is high.

In a possible implementation, before that the target adaptive equalization coefficient corresponding to the anomaly type of the transmission path is determined from the plurality of candidate adaptive equalization coefficients, the method further includes: Anomaly detection is performed on the transmission path, and the anomaly type of the transmission path is obtained based on an anomaly detection result. In the method, whether an anomaly occurs on the transmission path can be sensed by performing the anomaly detection on the transmission path of the signal. In this way, when the anomaly occurs on the transmission path, the transmission path is recovered in a timely manner.

In a possible implementation, one candidate adaptive equalization coefficient corresponds to one storage time point. That the target adaptive equalization coefficient corresponding to the anomaly type of the transmission path is determined from the plurality of candidate adaptive equalization coefficients includes: A detection duration corresponding to the anomaly type is determined based on the anomaly type of the transmission path; and a candidate adaptive equalization coefficient whose storage time point and a current time point have an interval greater than or equal to the detection duration is determined from the plurality of candidate adaptive equalization coefficients; and the determined candidate adaptive equalization coefficient is used as the target adaptive equalization coefficient.

The candidate adaptive equalization coefficient whose storage time point and the current time point have the interval greater than or equal to the detection duration is determined based on the detection duration, and then the target adaptive equalization coefficient is determined from the determined candidate adaptive equalization coefficient. This can ensure that the transmission path of the signal is normal at the storage time point corresponding to the target adaptive equalization coefficient, and ensure reliability of the target adaptive equalization coefficient.

In a possible implementation, before that the target adaptive equalization coefficient corresponding to the anomaly type of the transmission path is determined from the plurality of candidate adaptive equalization coefficients, the method further includes: A path type of the transmission path is obtained; and an adaptive equalization coefficient of the transmission path in each storage cycle is stored based on a storage cycle corresponding to the path type, to obtain the plurality of candidate adaptive equalization coefficients. The plurality of adaptive equalization coefficients are stored based on the storage cycle corresponding to the path type, so that a frequency of storing the adaptive equalization coefficients can flexibly adapt to the transmission path.

In a possible implementation, that anomaly detection is performed on the transmission path, and the anomaly type of the transmission path is obtained based on an anomaly detection result includes: Signal anomaly detection is performed on the signal, where in response to detecting at least one of the signal being intermittently disconnected, an amplitude of the signal being less than a target amplitude, a frequency error of the signal being greater than a target frequency error, or the adaptive equalization operation performed based on the signal being not converged, the anomaly type of the transmission path is a signal anomaly.

In a possible implementation, that anomaly detection is performed on the transmission path, and the anomaly type of the transmission path is obtained based on an anomaly detection result includes: A clock in the signal is obtained, and clock anomaly detection is performed on the clock, where in response to detecting that the clock is lost and/or that a frequency offset of the clock is greater than a target frequency offset, the anomaly type of the transmission path is a clock anomaly.

In a possible implementation, that anomaly detection is performed on the transmission path, and the anomaly type of the transmission path is obtained based on an anomaly detection result includes: Data in the signal is obtained, and a target bit sequence in the data is identified, where in response to that the target bit sequence is not identified, the anomaly type of the transmission path is a data anomaly.

In the method, different types of anomaly detection are performed on the transmission path of the signal, so that comprehensive detection can be performed on the transmission path of the signal. Therefore, when different types of anomalies occur on the transmission path, the method can implement path recovery. An application scope is wide.

In a possible implementation, the method further includes: A target clock and a target data stream are obtained in response to the anomaly of the transmission path, where the target clock is a clock obtained based on the signal before the anomaly occurs on the transmission path; and data processing is performed on the target data stream based on the target clock. Before the transmission path of the signal is recovered, data processing is performed on the target data stream based on the target clock. A data processing process can be normally performed, and a subsequent operation performed based on a data processing result can also be normally performed. In other words, modules that perform the operations do not need to be reset or reinitialized, and a device that performs the method has high robustness.

In a possible implementation, the target data stream is an idle bitstream or a local fault (local fault, LF) bitstream.

According to a second aspect, a path recovery apparatus is provided. The apparatus includes:
a determining module, configured to: in response to an anomaly of a transmission path of a signal, determine, from a plurality of candidate adaptive equalization coefficients, a target adaptive equalization coefficient corresponding to an anomaly type of the transmission path, where each candidate adaptive equalization coefficient is an adaptive equalization coefficient that enables an adaptive equalization operation to converge;
an equalization module, configured to perform the adaptive equalization operation on the signal based on the target adaptive equalization coefficient to obtain an adaptive equalized signal; and
a recovery module, configured to recover the transmission path based on the adaptive equalized signal.

In a possible implementation, the apparatus further includes a detection module, configured to: perform anomaly detection on the transmission path, and obtain the anomaly type of the transmission path based on an anomaly detection result.

In a possible implementation, one candidate adaptive equalization coefficient corresponds to one storage time point. The determining module is configured to: determine, based on the anomaly type of the transmission path, a detection duration corresponding to the anomaly type; and determine, from the plurality of candidate adaptive equalization coefficients, a candidate adaptive equalization coefficient whose storage time point and a current time point have an interval greater than or equal to the detection duration; and use the determined candidate adaptive equalization coefficient as the target adaptive equalization coefficient.

In a possible implementation, the apparatus further includes: an obtaining module, configured to: obtain a path type of the transmission path; and store an adaptive equalization coefficient of the transmission path in each storage cycle based on a storage cycle corresponding to the path type, to obtain the plurality of candidate adaptive equalization coefficients.

In a possible implementation, the detection module is configured to: perform signal anomaly detection on the signal, where in response to detecting at least one of the signal being intermittently disconnected, an amplitude of the signal being less than a target amplitude, a frequency error of the signal being greater than a target frequency error, or the adaptive equalization operation performed based on the signal being not converged, the anomaly type of the transmission path is a signal anomaly.

In a possible implementation, the detection module is configured to: obtain a clock in the signal, and perform clock anomaly detection on the clock, where in response to detecting that the clock is lost and/or that a frequency offset of the clock is greater than a target frequency offset, the anomaly type of the transmission path is a clock anomaly.

In a possible implementation, the detection module is configured to: obtain data in the signal, and identify a target bit sequence in the data, where in response to that the target bit sequence is not identified, the anomaly type of the transmission path is a data anomaly.

In a possible implementation, the apparatus further includes: a processing module, configured to: obtain a target clock and a target data stream in response to the anomaly of the transmission path, where the target clock is a clock obtained based on the signal before the anomaly occurs on the transmission path; and perform data processing on the target data stream based on the target clock.

In a possible implementation, the target data stream is an idle bitstream or an LF bitstream.

According to a third aspect, a network device is provided, and includes a processor. The processor is coupled to a memory. The memory stores at least one program instruction or code, and the at least one program instruction or code is loaded and executed by the processor, to enable the network device to implement any path recovery method according to the first aspect.

According to a fourth aspect, a network system is provided. The network system includes a first device and a second device, the first device is configured to send a signal to the second device, so that the second device establishes a transmission path of the signal between the second device and the first device, and the second device is configured to perform any path recovery method according to the first aspect.

According to a fifth aspect, a computer-readable storage medium is provided. The storage medium stores at least one program instruction or code. When the program instruction or the code is loaded and executed by a processor, a computer is enabled to implement any path recovery method according to the first aspect.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal, and control the transceiver to send a signal. In addition, when the processor executes the instructions stored in the memory, the processor is enabled to perform any path recovery method according to the first aspect.

For example, there are one or more processors, and there are one or more memories.

For example, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a seventh aspect, a computer program or a computer program product is provided. The computer program or the computer program product includes computer program code. When the computer program code is run by a computer, the computer is enabled to perform any path recovery method according to the first aspect.

According to an eighth aspect, a chip is provided, and includes a processor, configured to invoke instructions from a memory and run the instructions stored in the memory, to enable a network device in which the chip is mounted to perform any path recovery method according to the first aspect.

For example, the chip further includes an input interface, an output interface, and the memory, where the input interface, the output interface, the processor, and the memory are connected through an internal connection path.

It should be understood that, for beneficial effects achieved by the technical solutions in the second aspect to the eighth aspect and the corresponding possible implementations in embodiments of this application, refer to the foregoing technical effects in the first aspect and the corresponding possible implementations. Details are not described herein again.

### BRIEF DESCRIPTION OF DRAWINGS

FIG. 1 is a schematic of an implementation environment of a path recovery method according to an embodiment of this application;
FIG. 2 is a flowchart of a path recovery method according to an embodiment of this application;
FIG. 3 is a schematic of a process of determining a target adaptive equalization coefficient according to an embodiment of this application;
FIG. 4 is a schematic of a process of obtaining a target clock and a target data stream according to an embodiment of this application;
FIG. 5 is a schematic of a process of a path recovery method according to an embodiment of this application;
FIG. 6 is a schematic of a structure of a path recovery apparatus according to an embodiment of this application;
FIG. 7 is a schematic of a structure of a network device according to an embodiment of this application;
FIG. 8 is a schematic of a structure of another network device according to an embodiment of this application; and
FIG. 9 is a schematic of a structure of another network device according to an embodiment of this application.

### DESCRIPTION OF EMBODIMENTS

Terms used in implementations of this application are merely used to explain embodiments of this application, but are not intended to limit this application. The following describes embodiments of this application with reference to the accompanying drawings.

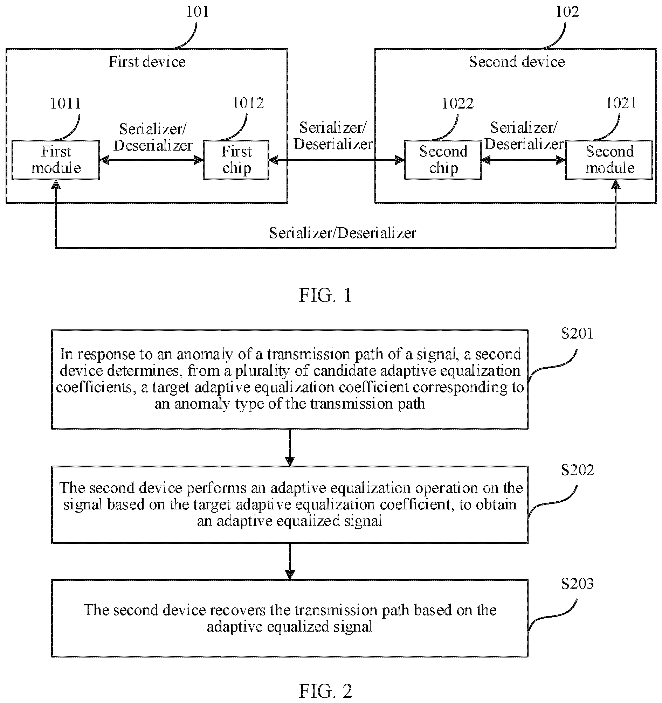

Embodiments of this application provide a path recovery method. For a case of an interruption in signal transmission due to an anomaly of a transmission path, the method provided in embodiments of this application can quickly recover the transmission path, to ensure normal execution of data processing corresponding to a signal. For example, the method is applied to an implementation environment shown in FIG. 1. As shown in FIG. 1, the implementation environment includes a first device 101 and a second device 102. The first device 101 and the second device 102 are communicatively connected by using a SerDes I/O interface. For example, as shown in FIG. 1, the first device 101 includes a first module 1011 and a first chip 1012, and the first module 1011 and the first chip 1012 are communicatively connected by using a SerDes I/O interface. The second device 102 includes a second module 1021 and a second chip 1022, and the second module 1021 and the second chip 1022 are communicatively connected by using a SerDes I/O interface. The first module 1011 and the second module 1021 are communicatively connected by using a SerDes I/O interface, and the first chip 1012 and the second chip 1022 are communicatively connected by using the SerDes I/O interface.

It should be noted that the first device 101 and the second device 102 mentioned in embodiments of this application may be network devices such as switches and routers, or may be other network devices having a signal transmission requirement. The first device 101 and the second device 102 are not limited in embodiments of this application. The first module 1011 and the second module 1021 may be a part of components on network devices, for example, boards or line cards on the network devices, or may be functional modules on the network devices. The first chip 1012 and the second chip 1022 may be network chips such as switch chips, network processors, media access control (media access control, MAC) chips, and physical layer (physical layer, PHY) chips. Types of the foregoing devices, modules, and chips are not specifically limited in embodiments of this application. The method provided in embodiments of this application may be performed by the first device 101 or the second device 102, may be performed by the first module 1011 or the first chip 1012 on the first device 101, or may be performed by the second module 1021 or the second chip 1022 on the second device 102. When the method provided in embodiments of this application is performed by the first chip 1012 or the second chip 1022, a processing unit configured to implement the method may be a processing circuit that has a processing function on the chip. A communication connection manner of the foregoing devices, modules, and chips includes but is not limited to direct connection through an Ethernet cable or an optical cable.

It may be understood that the implementation environment shown in FIG. 1 may include a plurality of devices, and each device may include at least one chip and/or at least one module. In FIG. 1, an example in which there are only two devices and each device includes one chip and one module is used for description.

With reference to the implementation environment shown in FIG. 1, the path recovery method provided in embodiments of this application is shown in FIG. 2. For example, the path recovery method provided in embodiments of this application is performed by a signal receiver. For example, in the implementation environment shown in FIG. 1, the second chip 1022 receives a signal sent by the first chip 1012, and the second chip 1022 performs the path recovery method provided in embodiments of this application. For example, in embodiments of this application, an example in which the first device 101 sends a signal to the second device 102, and the second device 102 performs the path recovery method is used for description. The method includes but is not limited to S201 to S203.

S201: In response to an anomaly of a transmission path of a signal, a second device determines, from a plurality of candidate adaptive equalization coefficients, a target adaptive equalization coefficient corresponding to an anomaly type of the transmission path.

In a possible implementation, after the second device establishes a transmission path of a signal between the second device and a first device, the method includes: performing anomaly detection on the transmission path. When an anomaly occurs on the transmission path, the second device recovers the transmission path. Embodiments of this application impose no limitation on an occasion of performing anomaly detection on the transmission path of the signal. For example, after the transmission path is established, the second device continuously performs anomaly detection on the transmission path of the signal. For another example, the second device periodically performs anomaly detection on the transmission path of the signal. A cycle for performing anomaly detection on the transmission path of the signal may be determined based on experience or an actual requirement. This is not limited in embodiments of this application. For another example, the second device performs anomaly detection on the transmission path of the signal in response to an obtained detection instruction. The detection instruction may be periodically triggered, or may be manually triggered. A manner of obtaining the detection instruction is not limited in this application.

For example, the anomaly detection performed on the transmission path of the signal includes but is not limited to the following three types: signal anomaly detection, clock anomaly detection, and data anomaly detection. In response to detecting any one of a signal anomaly, a clock anomaly, or a data anomaly, an anomaly occurs on the transmission path of the signal.

In a possible implementation, the signal anomaly detection includes at least one of the following detections: intermittent disconnection, an amplitude less than a target amplitude, a frequency error greater than a target frequency error, and non-convergence of an adaptive equalization operation performed based on the signal. Values of the target amplitude and the target frequency error may be set based on experience or an actual requirement. This is not limited in embodiments of this application.

For example, if the second device does not receive a signal at a moment at which signal anomaly detection is performed, the signal is intermittently disconnected. For example, the second device performs an adaptive equalization operation on a signal based on an adaptive equalization coefficient. When the adaptive equalization operation converges, interference caused by a transmission path in the signal can be eliminated. The interference caused by the transmission path may be inter-symbol interference (inter-symbol interference, ISI). When no anomaly occurs on the signal, an adaptive equalization operation performed on the signal based on an adaptive equalization coefficient obtained when the adaptive equalization operation converges converges. Therefore, the second device may detect whether an adaptive equalization operation performed based on a signal converges, to determine whether an anomaly occurs on the signal. An adaptive equalization algorithm for performing the adaptive equalization operation is not limited in embodiments of this application. The adaptive equalization algorithm includes but is not limited to at least one of an analog front-end equalization (analog front equalization, AFE) algorithm, a feed forward equalization (feed forward equalization, FFE) algorithm, or a decision feedback equalization (decision feedback equalization, DFE) algorithm.

The foregoing implementation of the signal anomaly detection is merely an implementation described by using an example in embodiments of this application. A skilled person may set a detection item of a signal based on experience or an actual requirement. When the signal does not meet a requirement of the detection item, it is determined that an anomaly occurs on the signal. The implementation of the signal anomaly detection is flexible.

For example, after the anomaly detection is performed on the transmission path of the signal, the method further includes: An anomaly type of the transmission path is obtained based on an anomaly detection result. For example, in response to detecting at least one of the signal being intermittently disconnected, an amplitude of the signal being less than the target amplitude, a frequency error of the signal being greater than the target frequency error, or the adaptive equalization operation performed based on the signal being not converged, the anomaly type of the transmission path is a signal anomaly.

In a possible implementation, that the anomaly detection is performed on the transmission path of the signal includes: obtaining a clock in the signal, and performing clock anomaly detection on the clock. For example, the clock anomaly detection includes at least one of the following detections: there is a loss and a frequency offset is greater than a target frequency offset. The target frequency offset may be set based on experience or an actual requirement. This is not limited in embodiments of this application.

For example, the second device performs clock tracing on the signal, to obtain the clock in the signal. For example, the second device implements clock tracing by using a clock data recovery (clock data recovery, CDR) circuit, and obtains the clock in the signal. The CDR circuit includes a phase-locked loop (phase-locked loop, PLL). The second device inputs the signal to the PLL, performs clock tracing on the signal by using the PLL, obtains the clock in the signal, and performs clock anomaly detection on the clock. In other words, the second device detects that the clock is lost, and/or the frequency offset of the clock is greater than the target frequency offset.

For example, when clock anomaly detection is performed, that an anomaly type of the transmission path is obtained based on an anomaly detection result includes: In response to detecting that the clock is lost and/or that the frequency offset of the clock is greater than the target frequency offset, the anomaly type of the transmission path is a clock anomaly.

In a possible implementation, that the anomaly detection is performed on the transmission path of the signal includes: Data in the signal is obtained, and a target bit sequence in the data is identified, where For example, after obtaining the clock in the signal, the second device samples the signal based on the clock, to obtain the data in the signal, to identify the target bit sequence in the data. The target bit sequence may be a specific bit sequence identified in the data when the transmission path of the signal is established. For example, the specific bit sequence is a bit sequence corresponding to a frame header of an Ethernet frame. The specific bit sequence periodically appears in the data. When no anomaly occurs on the data, after identifying the specific bit sequence, the second device can re-identify the specific bit sequence at intervals of a specific quantity of bits. The second device can determine, by identifying the target bit sequence, whether the data is abnormal.

For example, when data anomaly detection is performed, that an anomaly type of the transmission path is obtained based on an anomaly detection result includes: In response to that the target bit sequence is not identified, the anomaly type of the transmission path is a data anomaly. For example, that the target bit sequence is not identified means that an identified bit sequence is different from the target bit sequence, or a bit error rate of an identified bit sequence relative to the target bit sequence exceeds a reference value. When the bit error rate of the identified bit sequence does not exceed the reference value, the second device may determine that the target bit sequence is identified. For example, when the bit error rate of the identified bit sequence does not exceed the reference value, the second device can determine, based on the identified bit sequence, that the frame header of the Ethernet frame is identified, and the second device determines that the target bit sequence is identified. The reference value may be determined based on the bit error rate of the identified bit sequence relative to the target bit sequence when the second device cannot determine, based on the identified bit sequence, that the frame header of the Ethernet frame is identified.

The foregoing anomaly detection types are merely types described by using examples in embodiments of this application. A person skilled in the art may perform another type of anomaly detection on the transmission path of the signal based on a requirement. This is not limited in embodiments of this application. In the method provided in embodiments of this application, whether an anomaly occurs on the transmission path can be sensed by performing the anomaly detection on the transmission path of the signal. In this way, when the anomaly occurs on the transmission path, the transmission path is recovered in a timely manner.

In a possible implementation, before that the target adaptive equalization coefficient corresponding to the anomaly type of the transmission path is determined, in response to the anomaly of the transmission path of the signal, from the plurality of candidate adaptive equalization coefficients, the method further includes: A path type of the transmission path is obtained; and an adaptive equalization coefficient of the transmission path in each storage cycle is stored based on a storage cycle corresponding to the path type, to obtain the plurality of candidate adaptive equalization coefficients. For example, the plurality of candidate adaptive equalization coefficients are a plurality of adaptive equalization coefficients stored when no anomaly occurs on the transmission path. In other words, each candidate adaptive equalization coefficient is an adaptive equalization coefficient that enables an adaptive equalization operation to converge. The path type of the transmission path may be determined based on a transmission rate and/or a transmission distance of the signal. For example, the second device obtains the path type of the transmission path based on the transmission rate of the signal and/or the transmission distance between the second device and the first device.

After obtaining the path type of the transmission path, the second device stores the adaptive equalization coefficient of the transmission path in each storage cycle based on the storage cycle corresponding to the path type, and uses a plurality of stored adaptive equalization coefficients as the plurality of candidate adaptive equalization coefficients. For example, the storage cycle corresponding to the obtained path type is 10 microseconds (microsecond, µs). The second device stores the adaptive equalization coefficient of the transmission path once every 10 µs, and uses a plurality of stored adaptive equalization coefficients as the plurality of candidate adaptive equalization coefficients. An occasion and a duration for storing the adaptive equalization coefficient are not limited in embodiments of this application. For example, the second device periodically performs an operation of storing a plurality of candidate adaptive equalization coefficients, and a duration of each storage operation is a reference duration. The reference duration can be set based on a storage capability of a device. For example, the reference duration may be set to 0 to 5 seconds (second, s). For example, the storage cycle is 10 µs, and the reference duration is 5s. Within 5s, the second device stores the adaptive equalization coefficient of the transmission path once every 10 µs. In other words, the second device stores 10⁵ adaptive equalization coefficients each time the second device performs an operation of storing a plurality of candidate adaptive equalization coefficients.

The plurality of adaptive equalization coefficients are stored based on the storage cycle corresponding to the path type, so that a frequency of storing the adaptive equalization coefficients can flexibly adapt to the transmission path. For example, for a transmission path with a higher transmission rate of a signal, a frequency of storing an adaptive equalization coefficient is higher; and for a transmission path with a lower transmission rate of a signal, a frequency of storing an adaptive equalization coefficient is lower. Certainly, the second device may alternatively store the adaptive equalization coefficient of the transmission path in each storage cycle based on a preset storage cycle, to obtain the plurality of candidate adaptive equalization coefficients. The preset storage cycle may be a storage cycle that is set based on experience or an actual requirement.

For example, a time point for storing a candidate adaptive equalization coefficient is used as a storage time point corresponding to the candidate adaptive equalization coefficient. Therefore, one candidate adaptive equalization coefficient corresponds to one storage time point. For example, before that the target adaptive equalization coefficient corresponding to the anomaly type of the transmission path is determined from the plurality of candidate adaptive equalization coefficients, the method further includes: A detection duration corresponding to the anomaly type is determined based on the anomaly type of the transmission path. A candidate adaptive equalization coefficient whose storage time point and a current time point have an interval greater than or equal to the detection duration is determined from the plurality of candidate adaptive equalization coefficients, and the determined candidate adaptive equalization coefficient is used as the target adaptive equalization coefficient.

In a possible implementation, the detection duration corresponding to the anomaly type is a duration required for completing one time of anomaly detection for this type. For example, the anomaly type is a signal anomaly, and a detection duration corresponding to the signal anomaly is a duration required for completing one time of signal anomaly detection.

In a possible implementation, there are a plurality of anomaly types of the transmission path, that is, there are a plurality of determined detection durations. That a candidate adaptive equalization coefficient whose storage time point and a current time point have an interval greater than or equal to the detection duration is determined from the plurality of candidate adaptive equalization coefficients, and the determined candidate adaptive equalization coefficient is used as the target adaptive equalization coefficient includes: For each detection duration, a candidate adaptive equalization coefficient whose storage time point and a current time point have an interval greater than or equal to the detection duration is determined from the plurality of candidate adaptive equalization coefficients; and in a plurality of candidate adaptive equalization coefficients determined based on a plurality of detection durations, a candidate adaptive equalization coefficient whose storage time point is the earliest is used as the target adaptive equalization coefficient. When a plurality of anomalies occur on the transmission path, a candidate adaptive equalization coefficient whose storage time point and a current time point have an interval greater than or equal to the detection duration is determined based on each detection duration, and then a candidate adaptive equalization coefficient whose storage time point is the earliest in a plurality of determined candidate adaptive equalization coefficients is determined as a target adaptive equalization coefficient. This can ensure that the transmission path of the signal is normal at the storage time point corresponding to the target adaptive equalization coefficient, and ensure reliability of the target adaptive equalization coefficient.

For example, for each detection duration, if a plurality of candidate adaptive equalization coefficients whose storage time points and a current time point have intervals greater than or equal to the detection duration are determined from a plurality of stored candidate adaptive equalization coefficients, a candidate adaptive equalization coefficient whose storage time point is the latest in the plurality of determined candidate adaptive equalization coefficients is used as a candidate adaptive equalization coefficient determined based on the detection duration.

In a signal transmission process, the signal may change, and the receiver may adjust an adaptive equalization coefficient based on a changed signal, so that an adaptive equalization operation is converged. When a signal changes slightly within a short period of time, a plurality of adaptive equalization coefficients obtained through adjustment based on the signal are similar. The receiver uses, as the candidate adaptive equalization coefficient determined based on the detection duration, the candidate adaptive equalization coefficient whose storage time point is the latest in the plurality of determined candidate adaptive equalization coefficients. In other words, in the plurality of determined candidate adaptive equalization coefficients, the receiver uses, as the candidate adaptive equalization coefficient determined based on the detection duration, a candidate adaptive equalization coefficient whose storage time point and a time point at which an anomaly is detected have a shortest interval. When the candidate adaptive equalization coefficient is used as the target adaptive equalization coefficient, the adaptive equalization operation is performed on the signal based on the target adaptive equalization coefficient, and the target adaptive equalization coefficient is adjusted based on a signal obtained through the operation. Because the interval between the storage time point for the target adaptive equalization coefficient and the time point at which the anomaly is detected is short, when the signal changes slightly, the adaptive equalization coefficient that enables the adaptive equalization operation to converge can be obtained through a small quantity of adjustment times, thereby shortening a period of time for coefficient adjustment until the adaptive equalization operation converges, further shortening path recovery time, and improving path recovery efficiency.

In a possible implementation, one candidate adaptive equalization coefficient corresponds to one storage area. After determining the candidate adaptive equalization coefficient serving as the target adaptive equalization coefficient, the second device obtains the determined candidate adaptive equalization coefficient as the target adaptive equalization coefficient from a storage area corresponding to a subsequent determined adaptive equalization coefficient, and then performs an adaptive equalization operation on the signal based on the target adaptive equalization coefficient.

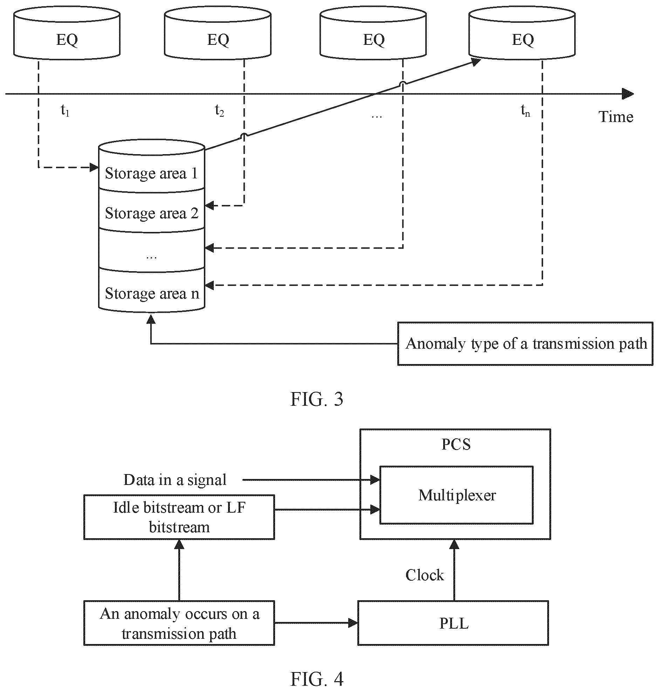

For example, FIG. 3 is a schematic of a process of determining a target adaptive equalization coefficient according to an embodiment of this application. As shown in FIG. 3, the second device performs an adaptive equalization operation on a signal by using an equalizer (equalizer, EQ), and a coefficient used when the equalizer performs the adaptive equalization operation is an adaptive equalization coefficient. The second device stores an adaptive equalization coefficient at a moment t₁ in a storage area 1, stores an adaptive equalization coefficient at a moment t₂ in a storage area 2, and by analogy, stores an adaptive equalization coefficient at a moment tₙ in a storage area n. The plurality of stored adaptive equalization coefficients are the plurality of candidate adaptive equalization coefficients. In response to the anomaly of a transmission path of the signal, the detection duration corresponding to the anomaly type is determined based on the anomaly type of the transmission path. Then, the candidate adaptive equalization coefficient whose storage time point and the current time point have the interval greater than or equal to the detection duration is determined from the plurality of candidate adaptive equalization coefficients, and the determined candidate adaptive equalization coefficient is used as the target adaptive equalization coefficient. For example, in the plurality of candidate adaptive equalization coefficients shown in FIG. 3, if a candidate adaptive equalization coefficient stored at the moment t₁ is the target adaptive equalization coefficient, the candidate adaptive equalization coefficient may be applied to the equalizer. The equalizer performs an adaptive equalization operation on a signal based on the target adaptive equalization coefficient.

S202. The second device performs the adaptive equalization operation on the signal based on the target adaptive equalization coefficient, to obtain an adaptive equalized signal.

For example, the second device performs the adaptive equalization operation on the signal based on the target adaptive equalization coefficient, adjusts the target adaptive equalization coefficient based on the signal obtained through the operation, and performs the adaptive equalization operation on the signal again based on an adjusted adaptive equalization coefficient. The second device repeatedly performs the foregoing adaptive equalization operation and coefficient adjustment processes until the adaptive equalization operation converges. The second device performs the adaptive equalization operation on the signal based on an adaptive equalization coefficient obtained when the adaptive equalization operation converges, to obtain the adaptive equalized signal.

When the second device receives the signal sent by the first device for the first time, that is, when the second device establishes the transmission path between the second device and the first device for the first time, the second device performs the adaptive equalization operation on the signal based on an initial adaptive equalization coefficient, adjusts the initial adaptive equalization coefficient based on the signal obtained through the operation, performs the adaptive equalization operation on the signal again based on an adjusted adaptive equalization coefficient, and repeatedly performs the foregoing adaptive equalization operation and coefficient adjustment processes until the adaptive equalization operation converges. The initial adaptive equalization coefficient is an adaptive equalization coefficient used by a module that performs adaptive equalization in the second device to perform an adaptive equalization operation after reset and initialization. Time consumed from the adaptive equalization operation and the coefficient adjustment that start to be performed based on the initial adaptive equalization coefficient to convergence of the adaptive equalization operation usually take several seconds to dozens of seconds. In the method provided in this embodiment of this application, because the target adaptive equalization coefficient is an adaptive equalization coefficient that is stored when no anomaly occurs on the transmission path and that can enable the adaptive equalization operation to converge, time required from the adaptive equalization operation and the coefficient adjustment that start to be performed based on the target adaptive equalization coefficient to convergence of the adaptive equalization operation is shortened to a millisecond level. According to the method provided in this embodiment of this application, time for convergence of an adaptive equalization operation can be shortened by more than 90%. Even if a case in which a module that performs adaptive equalization is reset due to intermittent optical signal disconnection, abnormal cable insertion and removal, or abnormal device reset occurs, because the method can greatly improve a convergence speed of an adaptive equalization operation after the module that performs the adaptive equalization is re-initialized, efficiency of path recovery can still be greatly improved.

S203. The second device recovers the transmission path based on the adaptive equalized signal.

In a possible implementation, the second device obtains a clock in the adaptive equalized signal, obtains data in the adaptive equalized signal based on the obtained clock, and identifies a target bit sequence in the data; and in response to identifying the target bit sequence, determines that the transmission path of the signal is recovered. For example, the second device performs clock tracing on the adaptive equalized signal by using a CDR circuit, to obtain the clock in the adaptive equalized signal; samples the received signal based on the clock, to obtain the data in the signal; identifies the target bit sequence in the data; and determines, in response to identifying the target bit sequence, that the transmission path of the signal is recovered. A principle of the process of obtaining the clock, obtaining the data, and identifying the target bit sequence is the same as that of the foregoing related process of clock anomaly detection and data anomaly detection. Details are not described herein again.

In a possible implementation, the method further includes: A target clock and a target data stream are obtained in response to the anomaly of the transmission path, where the target clock is a clock obtained based on the signal before the anomaly occurs on the transmission path; and data processing is performed on the target data stream based on the target clock. For example, the target data stream is an idle (idle) bitstream or an LF bitstream.

For example, FIG. 4 is a schematic of a process of obtaining a target clock and a target data stream according to an embodiment of this application. As shown in FIG. 4, the second device includes a multiplexer (mux) at a physical coding sublayer (physical coding sublayer, PCS), and the mux is configured to switch data for performing data processing. In response to the anomaly of the transmission path, the second device keeps a clock output by a PLL unchanged, where the clock is a clock obtained based on the signal before the anomaly occurs on the transmission path, and uses the clock as the target clock. The second device generates an idle bitstream or an LF bitstream, and inputs the generated idle bitstream or LF bitstream into the mux. The mux switches the data for performing data processing from the data in the signal to the idle bitstream or the LF bitstream, so that the second device performs data processing on the idle bitstream or the LF bitstream based on the target clock.

When the anomaly occurs on the transmission path of the signal, regardless of whether the signal is abnormal, the clock is abnormal, or the data is abnormal, the second device cannot perform subsequent data processing on the data of the signal. When data processing cannot be performed, a module configured for data processing and a module that performs a subsequent operation based on a data processing result (collectively referred to as a related module below) in the second device sense the anomaly, and perform a corresponding operation. For example, when data processing cannot be performed, the related module is reset; and after a clock for data processing and a data stream or a data processing result are received again, is re-initialized and performs a corresponding processing procedure. According to the method provided in this embodiment of this application, before the transmission path of the signal is recovered, the target clock and the target data stream are obtained, and data processing is performed on the target data stream based on the target clock, so that a data processing process can be normally performed, and a subsequent operation performed based on the data processing result can also be normally performed. In other words, the related module does not sense the anomaly of the transmission path of the signal, and maintains normal running without a reset or re-initialization process. Therefore, the second device has high robustness.

In a possible implementation, after the transmission path of the signal is recovered, the method further includes: Data processing is performed on the data in the adaptive equalized signal based on the clock in the adaptive equalized signal. In other words, after the transmission path of the signal is recovered, the second device switches from performing data processing on the target data stream based on the target clock to performing data processing on the data in the signal based on the clock in the signal.

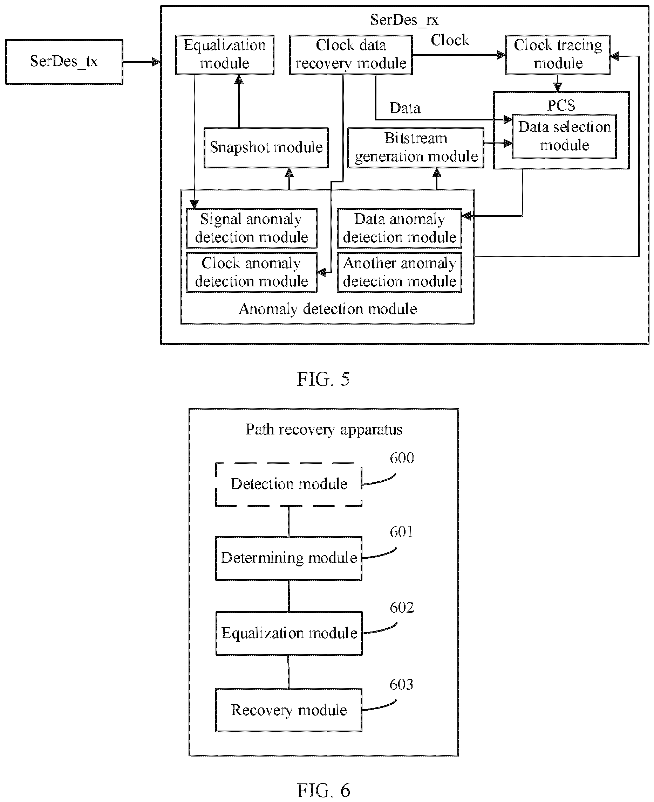

Next, an example in which a SerDes transmitter (SerDes transmitter, SerDes_tx) is the first device and a SerDes receiver (SerDes receiver, SerDes_rx) is the second device is used for description, to describe the path recovery method provided in embodiments of this application more clearly. FIG. 5 is a schematic of a process of a path recovery method according to an embodiment of this application. As shown in FIG. 5, the SerDes_rx includes an equalization module, a clock data recovery module, a clock tracing module, a data selection module, an anomaly detection (fault detection, fault_det) module, a snapshot (snapshot) module, and a bitstream generation module.

The equalization module may be implemented by an EQ, and is configured to perform an adaptive equalization (adaptive equalization) operation on a signal. The clock data recovery module may be implemented by a CDR circuit, and is configured to obtain a clock and data in an adaptive equalized signal. The clock tracing module may be implemented by a PLL, and is configured to trace a clock obtained by the CDR circuit, and transmit the traced clock to the data selection module. The data selection module may be implemented by a mux at a PCS, and is configured to switch data for performing data processing. For example, when an anomaly occurs on a transmission path of a signal, data for performing data processing is switched from the data in the adaptive equalized signal to an idle bitstream or an LF bitstream generated by the bitstream generation module; and when the transmission path of the signal is recovered, data for performing data processing is switched from the idle bitstream or the LF bitstream to the data in the adaptive equalized signal.

The anomaly detection module is configured to perform anomaly detection on the transmission path of the signal, and obtain an anomaly type of the transmission path based on an anomaly detection result. The snapshot module is configured to: obtain the plurality of candidate adaptive equalization coefficients; determine, in response to the anomaly of the transmission path of the signal, a target adaptive equalization coefficient corresponding to the anomaly type of the transmission path from the plurality of candidate adaptive equalization coefficients; and transmit the target adaptive equalization coefficient to the equalization module, so that the equalization module can perform an adaptive equalization operation on the signal based on the target adaptive equalization coefficient. The bitstream generation module is configured to obtain a target data stream when the anomaly occurs on the transmission path. For example, when the anomaly occurs on the transmission path, the bitstream generation module generates an idle bitstream or an LF bitstream.

In a possible implementation, the anomaly detection module includes but is not limited to a signal anomaly detection module (analog_los), a clock anomaly detection module (clk_los), and a data anomaly detection module (PCS_los). The analog_los is configured to: perform signal anomaly detection on the signal; and in response to detecting at least one of the signal being intermittently disconnected, an amplitude of the signal being less than a target amplitude, a frequency error of the signal being greater than a target frequency error, or the adaptive equalization operation performed based on the signal being not converged, determine a signal anomaly as the anomaly type of the transmission path. The clk_los is configured to: obtain a clock in the signal; perform clock anomaly detection on the clock; and in response to detecting that the clock is lost and/or that a frequency offset of the clock is greater than a target frequency offset, determine a clock anomaly as the anomaly type of the transmission path. The PCS_los is configured to: obtain data in a signal; identify a target bit sequence in the data; and in response to that the target bit sequence is not identified, determine a data anomaly as the anomaly type of the transmission path. The anomaly detection module may further include another anomaly detection module, configured to detect another type of anomaly.

For example, as shown in FIG. 5, the SerDes_rx receives a signal sent by the SerDes_tx, and establishes a transmission path of the signal between the SerDes_rx and the SerDes_tx. The anomaly detection module performs anomaly detection on the transmission path of the signal, and obtains an anomaly type of the transmission path based on an anomaly detection result. In response to an anomaly of the transmission path of the signal, the snapshot module determines, from a plurality of stored candidate adaptive equalization coefficients, a target adaptive equalization coefficient corresponding to the anomaly type of the transmission path, and transmits the target adaptive equalization coefficient to the equalization module. The equalization module performs an adaptive equalization operation on the signal based on the target adaptive equalization coefficient to obtain an adaptive equalized signal, and transmits the adaptive equalized signal to the clock data recovery module. The clock data recovery module recovers the transmission path based on the adaptive equalized signal. After obtaining a clock and data in the adaptive equalized signal, the clock data recovery module transmits the obtained clock to the clock tracing module, and transmits the obtained data to the data selection module.

In response to the anomaly of the transmission path of the signal, the clock tracing module no longer traces a received clock, uses, as a target clock, a clock that is traced when no anomaly occurs on the transmission path, and transmits the target clock to the data processing module of the PCS. The data processing module is not shown in FIG. 5. In response to the anomaly of the transmission path of the signal, the bitstream generation module obtains a target data stream, and transmits the target data stream to the data selection module. The data selection module switches data for performing data processing from the data in the signal to the target data stream, and transmits the target data stream to the data processing module. In response to transmission path recovery, the clock tracing module re-traces a received clock, and transmits the traced clock to the data processing module. The data selection module switches data for performing data processing from the target data stream to the data in the signal, and transmits the data in the signal to the data processing module.

In the method provided in this embodiment of this application, when the anomaly occurs on the transmission path of signal, the target adaptive equalization coefficient corresponding to the anomaly type of the transmission path is determined from the plurality of candidate adaptive equalization coefficients that can enable the adaptive equalization operation to converge, and the target adaptive equalization coefficient is used as an adaptive equalization coefficient applicable to the adaptive equalization operation. The adaptive equalization operation performed based on the target adaptive equalization coefficient can be quickly converged, so that the transmission path of the signal can be quickly restored, path recovery efficiency is high.

FIG. 6 is a schematic of a structure of a path recovery apparatus according to an embodiment of this application. For example, the apparatus is used in the second device shown in FIG. 2. Based on a plurality of modules shown in FIG. 6 below, the path recovery apparatus shown in FIG. 6 can perform all or a part of operations performed by the second device. It should be understood that the apparatus may include more additional modules than the shown modules, or a part of the shown modules are omitted. This is not limited in embodiments of this application. As shown in FIG. 6, the apparatus includes:
a determining module 601, configured to: in response to an anomaly of a transmission path of a signal, determine, from a plurality of candidate adaptive equalization coefficients, a target adaptive equalization coefficient corresponding to an anomaly type of the transmission path, where each candidate adaptive equalization coefficient is an adaptive equalization coefficient that enables an adaptive equalization operation to converge;
an equalization module 602, configured to perform the adaptive equalization operation on the signal based on the target adaptive equalization coefficient to obtain an adaptive equalized signal; and
a recovery module 603, configured to recover the transmission path based on the adaptive equalized signal.

In a possible implementation, the apparatus further includes a detection module 600, configured to: perform anomaly detection on the transmission path, and obtain the anomaly type of the transmission path based on an anomaly detection result.

In a possible implementation, one candidate adaptive equalization coefficient corresponds to one storage time point. The determining module 601 is configured to: determine, based on the anomaly type of the transmission path, a detection duration corresponding to the anomaly type; and determine, from the plurality of candidate adaptive equalization coefficients, a candidate adaptive equalization coefficient whose storage time point and a current time point have an interval greater than or equal to the detection duration; and use the determined candidate adaptive equalization coefficient as the target adaptive equalization coefficient.

In a possible implementation, the apparatus further includes: an obtaining module, configured to: obtain a path type of the transmission path; and store an adaptive equalization coefficient of the transmission path in each storage cycle based on a storage cycle corresponding to the path type, to obtain the plurality of candidate adaptive equalization coefficients.

In a possible implementation, the detection module 600 is configured to: perform signal anomaly detection on the signal, where in response to detecting at least one of the signal being intermittently disconnected, an amplitude of the signal being less than a target amplitude, a frequency error of the signal being greater than a target frequency error, or the adaptive equalization operation performed based on the signal being not converged, the anomaly type of the transmission path is a signal anomaly.

In a possible implementation, the detection module 600 is configured to: obtain a clock in the signal, and perform clock anomaly detection on the clock, where in response to detecting that the clock is lost and/or that a frequency offset of the clock is greater than a target frequency offset, the anomaly type of the transmission path is a clock anomaly.

In a possible implementation, the detection module 600 is configured to: obtain data in a signal, and identify a target bit sequence in the data, where in response to that the target bit sequence is not identified, the anomaly type of the transmission path is a data anomaly.

In a possible implementation, the apparatus further includes: a processing module, configured to: obtain a target clock and a target data stream in response to the anomaly of the transmission path, where the target clock is a clock obtained based on the signal before the anomaly occurs on the transmission path; and perform data processing on the target data stream based on the target clock.

In a possible implementation, the target data stream is an idle bitstream or an LF bitstream.

In the apparatus provided in this embodiment of this application, when the anomaly occurs on the transmission path of signal, the target adaptive equalization coefficient corresponding to the anomaly type of the transmission path is determined from the plurality of candidate adaptive equalization coefficients that can enable the adaptive equalization operation to converge, and the target adaptive equalization coefficient is used as an adaptive equalization coefficient applicable to the adaptive equalization operation. The adaptive equalization operation performed based on the target adaptive equalization coefficient can be quickly converged, so that the transmission path of the signal can be quickly restored, path recovery efficiency is high.

It should be understood that, when the apparatus provided in FIG. 6 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatuses provided in the foregoing embodiments and the method embodiments belong to a same concept. For specific implementation processes thereof, refer to the method embodiments. Details are not described herein.

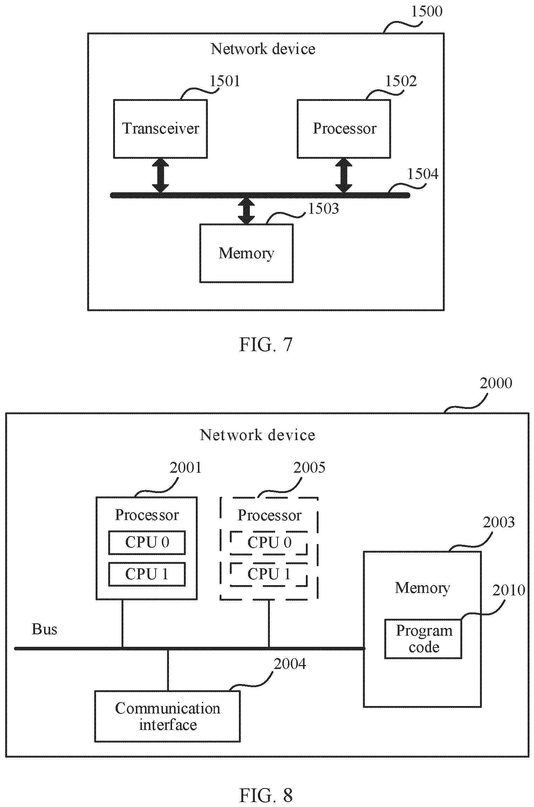

For a specific hardware structure of the device in the foregoing embodiment, refer to a network device 1500 shown in FIG. 7. The network device 1500 includes a transceiver 1501, a processor 1502, and a memory 1503. The transceiver 1501, the processor 1502, and the memory 1503 are connected to each other through a bus 1504. The transceiver 1501 is configured to send a signal and receive a signal. The memory 1503 is configured to store instructions or program code. The processor 1502 is configured to invoke the instructions or the program code in the memory 1503, so that the device performs related processing steps of the second device in the foregoing method embodiments. In a specific embodiment, the network device 1500 in this embodiment of this application may correspond to the first device or the second device in the foregoing method embodiments. The processor 1502 in the network device 1500 reads the instructions or the program code in the memory 1503, to enable the network device 1500 shown in FIG. 7 to perform all or a part of operations performed by the second device.

The network device 1500 may further correspond to the apparatus shown in FIG. 6. For example, the detection module 600 in FIG. 6 is equivalent to the transceiver 1501, and the determining module 601, the equalization module 602, and the recovery module 603 are equivalent to the processor 1502.

Refer to FIG. 8. FIG. 8 is a schematic of a structure of a network device 2000 according to an example embodiment of this application. The network device 2000 shown in FIG. 8 is configured to perform operations related to the path recovery method shown in FIG. 2. The network device 2000 is, for example, a switch or a router.

As shown in FIG. 8, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (graphics processing unit, GPU), a neural processing unit (neural processing unit, NPU), a data processing unit (data processing unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable logic gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one thick line is for representing the bus in FIG. 8, but this does not mean that there is only one bus or only one type of bus. In addition to being connected through the bus, the components of the network device 2000 in FIG. 8 may alternatively be connected in another manner. A manner in which the components are connected is not limited in embodiments of the present invention.

The memory 2003 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer, but is not limited thereto. For example, the memory 2003 exists independently, and is connected to the processor 2001 through the bus. Alternatively, the memory 2003 and the processor 2001 may be integrated together.

The communication interface 2004 uses any apparatus such as a transceiver, and is configured to communicate with another device or a communication network. The communication network may be an Ethernet, a radio access network (RAN), a wireless local area network (wireless local area network, WLAN), or the like. The communication interface 2004 may include a wired communication interface, and may further include a wireless communication interface. Specifically, the communication interface 2004 may be an Ethernet (ethernet) interface, a fast Ethernet (fast ethernet, FE) interface, a gigabit Ethernet (gigabit ethernet, GE) interface, an asynchronous transfer mode (asynchronous transfer mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 in FIG. 8. Each of the processors may be a single-core (single-CPU) processor or may be a multi-core (multi-CPU) processor. The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions of this application, and the processor 2001 may execute the program code 2010 stored in the memory 2003. In other words, the network device 2000 may implement the path recovery method in the method embodiments through the processor 2001 and the program code 2010 in the memory 2003. The program code 2010 may include one or more software modules. Optionally, the processor 2001 may also store program code or instructions for executing the solutions of this application.

In a specific embodiment, the network device 2000 in an embodiment of this application may correspond to the first device or the second device in the foregoing method embodiments. The processor 2001 in the network device 2000 reads the program code 2010 in the memory 2003 or the program code or the instructions stored in the processor 2001, to enable the network device 2000 shown in FIG. 8 to perform all or a part of operations performed by the first device or the second device.

The network device 2000 may further correspond to the apparatus in FIG. 6. Each functional module in the apparatus in FIG. 6 is implemented by software of the network device 2000. In other words, the functional module included in the apparatus in FIG. 6 is generated after the processor 2001 of the network device 2000 reads the program code 2010 stored in the memory 2003. For example, the detection module 600 in FIG. 6 is equivalent to a communication interface 2004, and the determining module 601, the equalization module 602, and the recovery module 603 are equivalent to the processor 2001 and/or the processor 2005.

Steps of the method in FIG. 2 are completed by using an integrated logic circuit of hardware in the processor of the network device 2000, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The processor reads information in the memory, and completes the steps of the foregoing methods in combination with hardware of the processor. To avoid repetition, details are not described herein again.

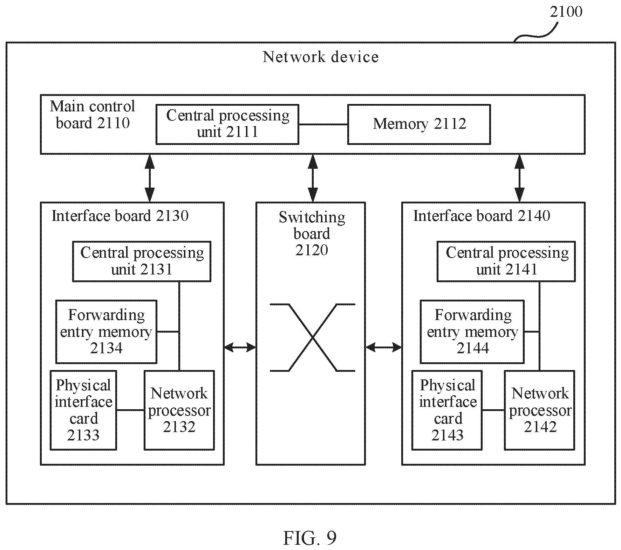

Refer to FIG. 9. FIG. 9 is a schematic of a structure of a network device 2100 according to another example embodiment of this application. The network device 2100 shown in FIG. 9 may be the first device or the second device, and is configured to perform all or a part of operations related to the path recovery method shown in FIG. 2. The network device 2100 is, for example, a switch or a router. The network device 2100 may be implemented by a general bus architecture. As shown in FIG. 9, the network device 2100 includes a main control board 2110 and an interface board 2130.

The main control board is also referred to as a main processing unit (main processing unit, MPU) or a route processor card (route processor card). The main control board 2110 is configured to: control and manage each component in the network device 2100, including functions of route calculation, device management, device maintenance, and protocol processing. The main control board 2110 includes a central processing unit 2111 and a memory 2112.

The interface board 2130 is also referred to as a line interface unit card (line processing unit, LPU), a line card (line card), or a service board. The interface board 2130 is configured to: provide various service interfaces and implement data packet forwarding. The service interfaces include but are not limited to an Ethernet interface and a POS (packet over SONET/SDH) interface. The Ethernet interface is, for example, a flexible Ethernet service interface (flexible Ethernet client, FlexE Client). The interface board 2130 includes: a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the packet processing device 2100, the network processor 2132 sends the packet to a CPU (for example, the central processing unit 2131) for processing. If a destination address of the packet is not an address of the network device 2100, the network processor 2132 finds, from a forwarding table based on the destination address, a next hop and an egress interface that correspond to the destination address, and forwards the packet to the egress interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130 from the physical interface card 2133, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

For example, the network device 2100 further includes a switching board 2120. The switching board 2120 may also be referred to as a switch fabric unit (switch fabric unit, SFU). When the network device has a plurality of interface boards, the switching board 2120 is configured to perform data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110 and the interface board 2130, and between the main control board 2110 and the interface board 2140. The main control board 2110 communicates with the interface board 2130 and the interface board 2140 through IPC channels.

Logically, the network device 2100 includes a control plane and a forwarding plane. The control plane includes the main control board 2110 and the central processing unit 2111. The forwarding plane includes components such as the forwarding entry memory 2134, the physical interface card 2133, and the network processor 2132 that perform forwarding. The control plane performs functions such as a router, generating a forwarding table, processing signaling and protocol packets, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger number of interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need a switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the packet processing device in the distributed architecture is greater than that of the packet processing device in the centralized architecture. Optionally, a form of the network device may alternatively be that there is only a single board. To be specific, there is no switching board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 2100 corresponds to the path recovery apparatus shown in FIG. 6. In some embodiments, the detection module 600 in the path recovery apparatus shown in FIG. 6 is equivalent to the physical interface card 2133 in the network device 2100, and the determining module 601, the equalization module 602, and the recovery module 603 are equivalent to the central processing unit 2111 or the network processor 2132 in the network device 2100.

Based on the network devices shown in FIG. 7 to FIG. 9, an embodiment of this application further provides a network system. The network system includes a first device and a second device. Optionally, the first device is any one of the network device 1500 shown in FIG. 7, the network device 2000 shown in FIG. 8, or the network device 2100 shown in FIG. 9, and the second device is any one of the network device 1500 shown in FIG. 7, the network device 2000 shown in FIG. 8, or the network device 2100 shown in FIG. 9.

The first device may send a signal to the second device, so that the second device establishes a transmission path of the signal between the second device and the first device. The second device may further perform the path recovery method in the foregoing method embodiments. For a method performed by the second device, refer to related descriptions in the embodiment shown in FIG. 2. Details are not described herein again.

It should be understood that the processor may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor or any conventional processor or the like. It should be noted that the processor may be a processor that supports an advanced reduced instruction set machine (advanced RISC machine, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A computer-readable storage medium is further provided. The storage medium stores at least one program instruction or code. When the program instruction or the code is loaded and executed by a processor, a computer is enabled to implement the path recovery method in FIG. 2.

This application provides a computer program (product). When the computer program (product) is executed by a computer, a processor or the computer may be enabled to perform corresponding steps and/or procedures in the foregoing method embodiments.

A chip is provided. The chip includes a processor, configured to invoke instructions from a memory and run the instructions stored in the memory, to enable a network device in which the chip is mounted to perform the method in the foregoing aspects.

For example, the chip further includes an input interface, an output interface, and the memory, where the input interface, the output interface, the processor, and the memory are connected through an internal connection path.

A device is further provided. The device includes the foregoing chip. Optionally, the device is a network device. For example, the device is a router, a switch, or a server.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, including one or more usable media. The usable medium may be a magnetic medium (for example, a floppy disk, a hard disk, or a magnetic tape), an optical medium (for example, a DVD), a semiconductor medium (for example, a solid-state drive (solid state drive, SSD)), or the like.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When software is used to implement embodiments, all or a part of embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable path recovery apparatus, so that when the program code is executed by the computer or the another programmable path recovery apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a specific working process of the foregoing system, device, and module, refer to a corresponding process in the foregoing method embodiments. Details are not described herein.

In the several embodiments provided in this application, it should be understood that the disclosed system, device, and method may be implemented in other manners. For example, the described device embodiment is merely an example. For example, division into modules is merely division of logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by some interfaces, devices, or modules, or may be electrical, mechanical, or other forms of connection.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, terms such as "first" and "second" are used to distinguish between same items or similar items that have basically same functions. It should be understood that there is no logical or time sequence dependency between "first", "second", and "n^{th}", and a quantity and an execution sequence are not limited. It should also be understood that although the following descriptions use terms such as "first" and "second" to describe various elements, these elements should not be limited by the terms. These terms are simply used to distinguish one element from another. For example, without departing from a scope of the various examples, a first device may be referred to as a second device, and similarly, a second device may be referred to as a first device. Both the first device and the second device may be network devices of any type, and in some cases, may be separate and different network devices.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should be further understood that "an embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

## Claims

1. A path recovery method, comprising:
in response to an anomaly of a transmission path of a signal, determining, from a plurality of candidate adaptive equalization coefficients, a target adaptive equalization coefficient corresponding to an anomaly type of the transmission path, wherein each candidate adaptive equalization coefficient is an adaptive equalization coefficient that enables an adaptive equalization operation to converge;
performing the adaptive equalization operation on the signal based on the target adaptive equalization coefficient to obtain an adaptive equalized signal; and
recovering the transmission path based on the adaptive equalized signal.

2. The method according to claim 1, wherein before the determining, from a plurality of candidate adaptive equalization coefficients, a target adaptive equalization coefficient corresponding to an anomaly type of the transmission path, the method further comprises:
performing anomaly detection on the transmission path, and obtaining the anomaly type of the transmission path based on an anomaly detection result.

3. The method according to claim 1 or 2, wherein one candidate adaptive equalization coefficient corresponds to one storage time point; and the determining, from a plurality of candidate adaptive equalization coefficients, a target adaptive equalization coefficient corresponding to an anomaly type of the transmission path comprises:
determining, based on the anomaly type of the transmission path, a detection duration corresponding to the anomaly type; and
determining, from the plurality of candidate adaptive equalization coefficients, a candidate adaptive equalization coefficient whose storage time point and a current time point have an interval greater than or equal to the detection duration; and using the determined candidate adaptive equalization coefficient as the target adaptive equalization coefficient.

4. The method according to any one of claims 1 to 3, wherein before the determining, from a plurality of candidate adaptive equalization coefficients, a target adaptive equalization coefficient corresponding to an anomaly type of the transmission path, the method further comprises:
obtaining a path type of the transmission path; and
storing an adaptive equalization coefficient of the transmission path in each storage cycle based on a storage cycle corresponding to the path type, to obtain the plurality of candidate adaptive equalization coefficients.

5. The method according to any one of claims 2 to 4, wherein the performing anomaly detection on the transmission path, and obtaining the anomaly type of the transmission path based on an anomaly detection result comprises:
performing signal anomaly detection on the signal, wherein
in response to detecting at least one of the signal being intermittently disconnected, an amplitude of the signal being less than a target amplitude, a frequency error of the signal being greater than a target frequency error, or the adaptive equalization operation performed based on the signal being not converged, the anomaly type of the transmission path is a signal anomaly.

6. The method according to any one of claims 2 to 4, wherein the performing anomaly detection on the transmission path, and obtaining the anomaly type of the transmission path based on an anomaly detection result comprises:
obtaining a clock in the signal, and performing clock anomaly detection on the clock, wherein
in response to detecting that the clock is lost and/or that a frequency offset of the clock is greater than a target frequency offset, the anomaly type of the transmission path is a clock anomaly.

7. The method according to any one of claims 2 to 4, wherein the performing anomaly detection on the transmission path, and obtaining the anomaly type of the transmission path based on an anomaly detection result comprises:
obtaining data in the signal, and identifying a target bit sequence in the data, wherein
in response to that the target bit sequence is not identified, the anomaly type of the transmission path is a data anomaly.

8. The method according to any one of claims 1 to 7, further comprising:
obtaining a target clock and a target data stream in response to the anomaly of the transmission path, wherein the target clock is a clock obtained based on the signal before the anomaly occurs on the transmission path; and
performing data processing on the target data stream based on the target clock.

9. The method according to claim 8, wherein the target data stream is an idle bitstream or a local fault LF bitstream.

10. A path recovery apparatus, comprising:
a determining module, configured to: in response to an anomaly of a transmission path of a signal, determine, from a plurality of candidate adaptive equalization coefficients, a target adaptive equalization coefficient corresponding to an anomaly type of the transmission path, wherein each candidate adaptive equalization coefficient is an adaptive equalization coefficient that enables an adaptive equalization operation to converge;
an equalization module, configured to perform the adaptive equalization operation on the signal based on the target adaptive equalization coefficient to obtain an adaptive equalized signal; and
a recovery module, configured to recover the transmission path based on the adaptive equalized signal.

11. The apparatus according to claim 10, further comprising a detection module, wherein the detection module is configured to:
perform anomaly detection on the transmission path; and
obtain the anomaly type of the transmission path based on an anomaly detection result.

12. The apparatus according to claim 10 or 11, wherein one candidate adaptive equalization coefficient corresponds to one storage time point; and
the determining module is further configured to:
determine, based on the anomaly type of the transmission path, a detection duration corresponding to the anomaly type; and
determine, from the plurality of candidate adaptive equalization coefficients, a candidate adaptive equalization coefficient whose storage time point and a current time point have an interval greater than or equal to the detection duration; and use the determined candidate adaptive equalization coefficient as the target adaptive equalization coefficient.

13. The apparatus according to any one of claims 10 to 12, further comprising an obtaining module, wherein the obtaining module is configured to:
obtain a path type of the transmission path; and
store an adaptive equalization coefficient of the transmission path in each storage cycle based on a storage cycle corresponding to the path type, to obtain the plurality of candidate adaptive equalization coefficients.

14. The apparatus according to any one of claims 11 to 13, wherein the detection module is further configured to:
perform signal anomaly detection on the signal, wherein
in response to detecting at least one of the signal being intermittently disconnected, an amplitude of the signal being less than a target amplitude, a frequency error of the signal being greater than a target frequency error, or the adaptive equalization operation performed based on the signal being not converged, the anomaly type of the transmission path is a signal anomaly.

15. The apparatus according to any one of claims 11 to 13, wherein the detection module is further configured to:
obtain a clock in the signal, and perform clock anomaly detection on the clock, wherein
in response to detecting that the clock is lost and/or that a frequency offset of the clock is greater than a target frequency offset, the anomaly type of the transmission path is a clock anomaly.

16. The apparatus according to any one of claims 11 to 13, wherein the detection module is further configured to:
obtain data in the signal, and identify a target bit sequence in the data, wherein
in response to that the target bit sequence is not identified, the anomaly type of the transmission path is a data anomaly.

17. The apparatus according to any one of claims 10 to 16, further comprising:
a processing module, configured to:
obtain a target clock and a target data stream in response to the anomaly of the transmission path, wherein the target clock is a clock obtained based on the signal before the anomaly occurs on the transmission path; and
perform data processing on the target data stream based on the target clock.

18. The apparatus according to claim 17, wherein the target data stream is an idle bitstream or a local fault LF bitstream.

19. A computing device, comprising a processor, wherein the processor is coupled to a memory, the memory stores at least one program instruction or code, and the at least one program instruction or code is loaded and executed by the processor, to enable the computing device to implement the method according to any one of claims 1 to 9.

20. A network system, wherein the network system comprises a first device and a second device, the first device is configured to send a signal to the second device, so that the second device establishes a transmission path of the signal between the second device and the first device, and the second device is configured to perform the method according to any one of claims 1 to 9.

21. A computer-readable storage medium, wherein the computer-readable storage medium stores at least one program instruction or code; and when the program instruction or the code is loaded and executed by a processor, a computer is enabled to implement the method according to any one of claims 1 to 9.

22. A computer program product, comprising computer program code, wherein when the computer program code is run by a computer, the computer is enabled to perform the method according to any one of claims 1 to 9.

23. A chip, comprising a processor, wherein the processor is configured to: invoke instructions from a memory and run the instructions stored in the memory, to enable a network device in which the chip is mounted to perform the method according to any one of claims 1 to 9.

24. The chip according to claim 23, further comprising an input interface, an output interface, and the memory, wherein the input interface, the output interface, the processor, and the memory are connected through an internal connection path.
